# EUROPÄISCHE PATENTANMELDUNG

(11) **EP 1 291 238 A2**
(43) Veröffentlichungstag der Anmeldung: **12.03.2003**
(21) Anmeldenummer: 02017584.0
(22) Anmeldetag: 07.08.2002
(51) Int. Cl.: B60N 3/10

(54) **Sektglashalter**

(30) Priorität: 06.09.2001 DE 10143639
(71) Anmelder: fischer automotive systems GmbH, 72160 Horb a.N. (DE); DaimlerChrysler AG, 70567 Stuttgart (DE)
(72) Erfinder: Bastian, Ulf, 72178 Waldachtal (DE); Leopold, Gunter, 72270 Baiersbronn (DE); Körber, Jürgen, 71065 Sindelfingen (DE)

(57) **Zusammenfassung**

Die Erfindung betrifft einen Sektglashalter (10) zum Halten eines Sektglases in einem Kraftwagen. Die Erfindung schlägt vor, den Sektglashalter (10) mit einem absenkbaren Bodenelement (12), auf das ein Fuß eines Sektglases stellbar ist, und mit Niederhaltern (26), die den Fuß des Sektglases übergreifen, auszubilden. In der abgesenkten Stellung verhindert eine Sperrmechanik (36, 38) ein Schwenken der Niederhalter (26) nach oben in eine Entnahmestellung, wodurch das Sektglas kippsicher gehalten ist. Zur Entnahme muss das Sektglas angehoben werden, das mit seinem von den Niederhaltern (26) übergriffenen Fuß das Bodenelement (12) gleichmäßig anhebt, so dass Sperrelemente (36) der Sperrmechanik (36, 38) freikommen und die Niederhalter (26) nach oben in eine Entnahmestellung schwenken können.

## Beschreibung

Die Erfindung betrifft einen Sektglashalter, der zum Einbau in ein Fortbewegungsmittel, bspw. einen Kraftwagen, Flugzeug oder Schiff, vorgesehen ist, gemäß dem Oberbegriff des Anspruchs 1.

Der Erfindung liegt die Aufgabe zugrunde, einen Sektglashalter vorzuschlagen, der ein Sektglas bei Beschleunigung in beliebiger Richtung (Beschleunigen, Bremsen, Kurvenfahrt) und Erschütterung kippsicher stehend hält.

Diese Aufgabe wird erfindungsgemäß durch die Merkmale des Anspruchs 1 gelöst. Der erfindungsgemäße Sektglashalter weist ein vertikal bewegliches Bodenelement auf, auf das ein Fuß, eines Sektglases der üblicherweise eine kreisrunde, plattenförmige Form aufweist, stellbar ist. Das Bodenelement ist insbesondere eine kreisförmige Scheibe, es kann allerdings bspw. auch die Form eines Kreisrings aufweisen oder als Dreipunktauflage für den Fuß des Sektglases ausgebildet sein. Die vertikale Richtung, in der das Bodenelement des Sektglashalters beweglich ist, bezieht sich auf eine vorgesehene Einbaulage des Sektglashalters, in der dieser ein auf das Bodenelement gestelltes Sektglas stehend und mit dem Fuß des Sektglases in einer Horizontalebene ausgerichtet hält. Geringe Abweichungen, also ein etwas zur Seite gekippt gehaltenes Sektglas, sind nicht von Bedeutung und sollen vom Schutzumfang mit umfasst sein.

Desweiteren weist der erfindungsgemäße Sektglashalter mindestens zwei Niederhalter auf, die mit Abstand in Umfangsrichtung des Bodenelements bzw. eines darauf gestellten Fußes des Sektglases angeordnet sind. Weist der Sektglashalter zwei Niederhalter auf, sind diese vorzugsweise einander gegenüber angeordnet. Bei drei oder mehr Niederhaltern können diese mit gleichem oder auch mit unterschiedlichem Abstand voneinander angeordnet sein. Die Niederhalter sind so angeordnet, dass sie den Fuß eines auf das Bodenelement gestellten Sektglases zuverlässig gegen Kippen des Sektglases in beliebiger Richtung halten. Die Niederhalter sind zwischen einer Haltestellung und einer Entnahmestellung beweglich gelagert. In der Haltestellung befinden sich die Niederhalter mit geringem Abstand oberhalb des Bodenelements, sie übergreifen den Fuß eines auf dem Bodenelement stehenden Sektglases und halten den Fuß auf dem Bodenelement. Dadurch wird ein Kippen des Sektglases verhindert. Zum Entnehmen des Sektglases sind die Niederhalter in eine Entnahmestellung so weit nach außen bewegt, dass der Fuß des Sektglases zwischen den Niederhaltern herausgehoben werden kann.

Um ein Kippen eines gehaltenen Sektglases zu verhindern weist der erfindungsgemäße Sektglashalter eine Sperrmechanik auf, die bei nach unten bewegtem Bodenelement die Niederhalter gegen eine Bewegung aus der Haltestellung in die Entnahmestellung sperrt. Dies hat folgenden Grund: bei einer Beschleunigung eines Fortbewegungsmittels, in welches der Sektglashalter eingebaut ist, in beliebiger Richtung wird ein vom Sektglashalter stehend gehaltenes Sektglas mit einer Kraft in horizontaler Richtung beaufschlagt, die man sich am Schwerpunkt des Sektglases einschließlich eventuell eingefüllter Flüssigkeit angreifend vorstellen kann. Diese Kraft in horizontaler oder seitlicher Richtung bewirkt ein Moment auf einen Stiel und den Fuß des Sektglases. Dieses Moment drückt den Fuß des Sektglases an einer Umfangsstelle nach unten und hebt den Fuß an einer gegenüberliegenden Umfangsstelle an. Durch den Druck auf den Fuß des Sektglases an einer Stelle nach unten wird das Bodenelement des Sektglashalters nach unten gedrückt und die Sperrmechanik sperrt alle Niederhalter gegen eine Bewegung aus der Haltestellung in die Entnahmestellung. Dadurch wird der Fuß des Sektglases auch an der Umfangsstelle, an der das auf das Sektglas einwirkende Moment den Fuß anzuheben sucht, von dem oder den nahe dieser Umfangsstelle angeordneten Niederhaltern niedergehalten, wodurch das Sektglas stehend gehalten wird und nicht kippt.

Der erfindungsgemäße Sektglashalter hat den Vorteil, dass er sich grundsätzlich zum Halten beliebiger Sektgläser in Fortbewegungsmitteln eignet, sofern die Sektgläser einen zumindest näherungsweise kreisscheibenförmigen Fuß aufweisen, der von den Niederhaltern des Sektglashalters übergriffen werden kann. Die Sperrmechanik funktioniert selbsttätig, es ist kein manuelles betätigen der Sperrmechanik erforderlich.

Eine Ausgestaltung der Erfindung sieht eine Schwenklagerung für die Niederhalter vor, die die Niederhalter um gedachte Achsen, die tangential zum Bodenelement verlaufen, schwenkbar lagert. Die Niederhalter lassen sich aus der Haltestellung, in der sie in etwa horizontal nach innen stehen, in die Entnahmestellung nach oben und außen schwenken. Diese Ausgestaltung der Erfindung ermöglicht eine einfache Führung bzw. Lagerung der Niederhalter.

Eine Ausgestaltung der Erfindung sieht ein Antriebselement an den Niederhaltern vor, an denen der Fuß eines Sektglases beim Stellen des Sektglases auf das Bodenelement angreift und die Niederhalter aus der Entnahmestellung in die Haltestellung bewegt. Der Fuß des Sektglases kann unmittelbar oder mittelbar bspw. über das Bodenelement an den Antriebselementen der Niederhalter angreifen. Bei dieser Ausgestaltung der Erfindung werden die Niederhalter beim Stellen des Sektglases auf das Bodenelement des Sektglashalters selbsttätig in die Haltestellung bewegt. Dies hat den Vorteil, dass ein Sektglas mit einer Hand auf dem Sektglashalter abgestellt und wieder entnommen werden kann und ohne weitere Manipulation des Sektglashalters in der Haltestellung kippsicher gehalten ist.

Eine Ausgestaltung der Erfindung sieht eine Totpunktfedermechanik für die Niederhalter vor. Mit Totpunktfedermechanik ist eine Federmechanik gemeint, die die Niederhalter federbeaufschlagt sowohl in der Entnahmestellung als auch in der Haltestellung hält. Die Totpunktfedermechanik bewegt die Niederhalter durch Federkraft in Richtung der Entnahmestellung oder der Haltestellung, wenn die Niederhalter einen Totpunkt in Richtung der jeweiligen Stellung überwunden haben. Mit Totpunkt ist also eine bestimmte Stellung der Niederhalter zwischen der Entnahme- und der Haltestellung gemeint, in der die Totpunktfedermechanik die Niederhalter weder in die eine noch in die andere Richtung bewegt. Die Totpunktfedermechanik kann auf die Niederhalter oder das Bodenelement einwirken, es kann auch für die Niederhalter und für das Bodenelement eine Totpunktfedermechanik vorgesehen sein.

Eine andere Ausgestaltung der Erfindung sieht eine Push-Push-Verriegelungsmechanik vor, die die Niederhalter in der Halterstellung hält. Die Push-Push-Verriegelungsmechanik wirkt vorzugsweise auf das Bodenelement und über dieses mittelbar auf die Niederhalter. Sie wird durch Niederdrücken des Bodenelements verriegelt und hält das Bodenelement in einer abgesenkten Stellung. Durch kurzes Niederdrücken des Bodenelements über die Verriegelung hinweg wird die Push-Push-Verriegelungsmechanik wieder entriegelt, so dass ein vom Sektglashalter gehaltenes Sektglas entnommen werden kann. Push-Push-Verriegelungsmechaniken sind dem Fachmann an sich bekannt, sie werden teilweise auch als Herzkurvenverriegelung oder -steuerung bezeichnet.

Die Erfindung wird nachfolgend anhand eines in der Zeichnung dargestellten Ausführungsbeispiels näher erläutert. Es zeigen:
- Figur 1: einen erfindungsgemäßen Sektglashalter im Achsschnitt in einer Entnahmestellung;
- Figur 2: eine vergrößerte Einzelheitdarstellung gemäß Pfeil II in Figur 1;
- Figur 3: den Sektglashalter aus Figur 1 in einer Haltestellung;
- Figur 4: eine vergrößerte Einzelheitdarstellung gemäß Pfeil IV in Figur 3; und
- Figur 5: ein Federelement des Sektglashalters aus Figur 1 als Einzelteil.

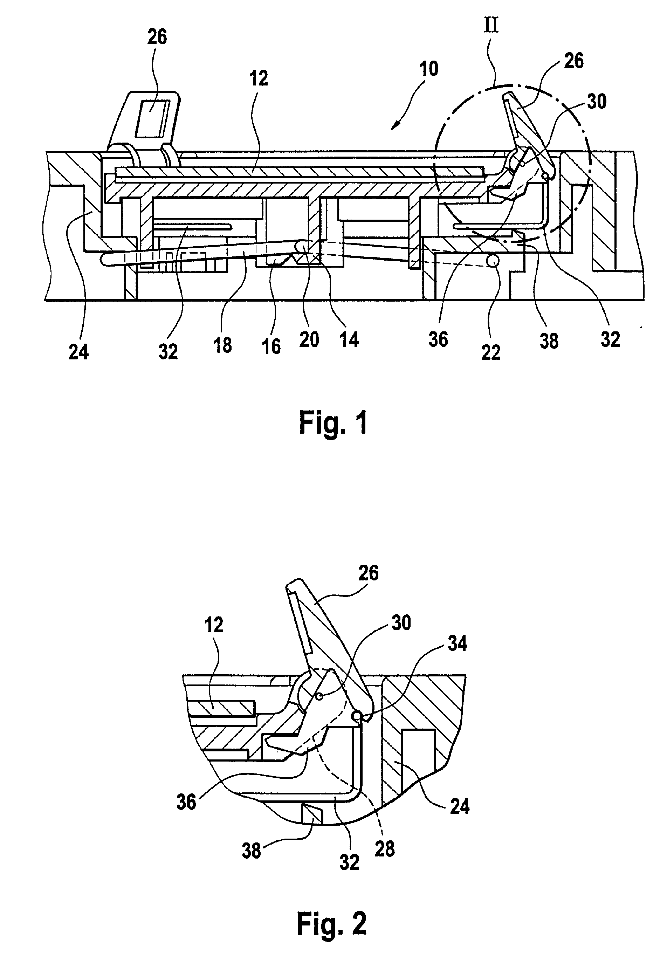

Der in Figur 1 dargestellte, erfindungsgemäße Sektglashalter 10 weist ein kreisscheibenförmiges, horizontal angeordnetes Bodenelement 12 auf, das vertikal beweglich ist. Dabei beziehen sich die Lageangaben "horizontal" und "vertikal" auf eine vorgesehene Einbaulage des Sektglashalters 10. In der Mitte steht von einer Unterseite des Bodenelements 12 ein Haken 14 ab, der zwischen zwei rippenförmigen Gegenhaltern 16 angeordnet ist. Zwischen dem Haken 14 und den Gegenhaltern 16 ist ein aus Federdraht gebogenes Federelement 18 befestigt, das in Figur 5 in Draufsicht dargestellt ist. Das Federelement 18 erstreckt sich quer unter dem Bodenelement 12, es weist eine Kröpfung 20 in seiner Mitte auf, die durch doppeltes rechtwinkliges Umbiegen in entgegengesetzten Richtungen herstellt ist. Die Abkröpfung 20 ist zwischen dem Haken 14 und den beiden Gegenhaltern 16 gehalten. Die beiden Enden 22 des Federelements 18 sind ebenfalls rechtwinklig umgebogen und in einem Rahmen 24 des Sektglashalters 10 befestigt. Das Federelement 18 müsste in Figur 1 geschnitten dargestellt sein, der klareren Darstellung wegen ist es in Seitenansicht gezeichnet.

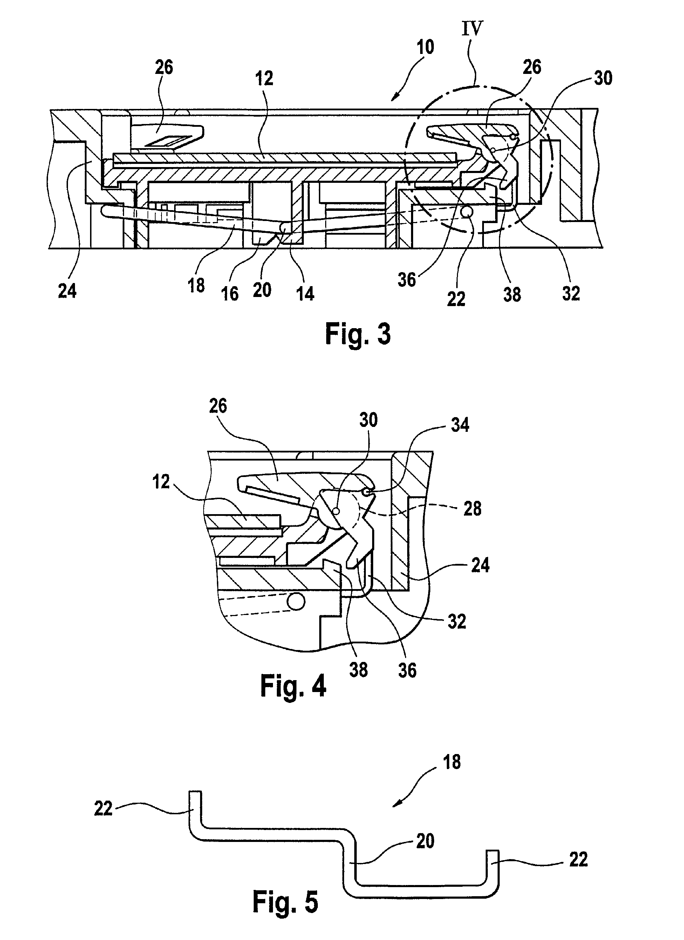

Ein Abstand, mit dem die beiden Enden 22 des Federelements 18 im Rahmen 24 gehalten sind, ist etwas kürzer als das Federelement 18, wenn es entspannt ist. Dadurch kann das Federelement 18 wie in Figur 1 dargestellt mit seiner Kröpfung 20 nach oben oder wie in Figur 3 dargestellt nach unten schnappen. Das Bodenelement 12 bewegt sich entsprechend mit dem Federelement 18 mit und wird vom Federelement 18 in seiner jeweiligen Endstellung gehalten. Es handelt sich um eine Totpunktfedermechanik, die das Bodenelement 12 nach Überwinden einer mittleren oder neutralen, als Totpunkt bezeichneten Stellung nach oben oder nach unten in die Endstellung bewegt und dort hält.

An drei Stellen eines Umfangs des Bodenelements 12 sind Niederhalter 26 schwenkbar angebracht. Die Niederhalter 26 sind als eine Art Klappen ausgebildet, die in einer in Figuren 1 und 2 dargestellten Entnahmestellung schräg nach oben und innen und in einer in Figuren 3 und 4 dargestellten Haltestellung näherungsweise horizontal nach innen über das Bodenelement 12 stehen. In der Haltestellung befinden sich die Niederhalter 26 mit etwas Abstand oberhalb des Bodenelements 12. Die Niederhalter 26 sind um gedachte horizontale und zum Bodenelement 12 tangentiale Achsen schwenkbar. Zur Schwenklagerung der Niederhalter 26 stehen für jeden Niederhalter 26 jeweils zwei Laschen 28 nach außen vom Bodenelement 12 ab, wie sie in Figuren 2 und 4 mit Strichlinien angedeutet sind. Die Laschen 28 sind einstückig mit dem Bodenelement 12, es ist an jeder Seite jedes Niederhalters 26 jeweils eine Lasche 28 angeordnet. Die Lachen 28 weisen ein Loch auf, in denen Schwenkzapfen 30 drehbar einliegen, die auf beiden Seiten von den Niederhaltern 26 abstehen. Die Niederhalter 26 sind dadurch in die in Figuren 1 und 2 dargestellte Entnahmestellung nach oben und in die in Figuren 3 und 4 dargestellte Haltestellung nach unten schwenkbar.

Jeder Niederhalter 26 weist eine Totpunktfedermechanik auf: zur Ausbildung der Totpunktfedermechanik ist für jeden Niederhalter 26 ein gebogener Federdraht 32 an einer Unterseite des Bodenelements 12 befestig. Jedes Federelement 32 verläuft unterhalb des Bodenelements 12 in etwa radial nach außen und nach einer Abbiegung um 90° in einem radial äußeren Bereich der Niederhalter 26 nach oben. Ein Ende 34 jedes Federelements 32 ist rechtwinklig horizontal und tangential zum Bodenelement 12 umgebogen und in eine in Seitenansicht schlüssellochförmige, außen offene Aussparung des Niederhalters 26 eingeschnappt. Das Federelement 32 beaufschlagt den Niederhalter 26 mit einer zum Bodenelement 12 radial nach innen gerichteten Federkraft. Ein Angriffspunkt des Federelements 32 befindet sich in der in Figuren 1 und 2 dargestellten, nach oben geschwenkten Entnahmestellung des Niederhalters 26 unterhalb deren durch die Schwenkzapfen 30 definierten Schwenkachse, so dass das Federelement 32 den Niederhalter 26 federelastisch in der Entnahmestellung hält. In der in Figuren 3 und 4 dargestellten, nach unten geschwenkten Haltestellung der Niederhalter 26 befindet sich der Angriffspunkt der Federelemente 32 oberhalb der durch die Schwenkzapfen 30 definierten Schwenkachse des Niederhalters 26, so dass das Federelement 32 ein nach unten gerichtetes Moment auf den Niederhalter 26 ausübt und diesen federelastisch in der Haltestellung hält. In einer nicht dargestellten Zwischenstellung zwischen der Haltestellung und der Entnahmestellung greift das Federelement 32 in Höhe der Schwenkachse des Niederhalters 26 an und übt somit kein Moment auf den Niederhalter 26 aus. Diese Zwischenstellung wird als Totpunkt bezeichnet. Wird der Niederhalter 26 nach oben über den Totpunkt hinweg bewegt, schwenkt das Federelement 32 den Niederhalter 26 nach oben in die Entnahmestellung, wird der Totpunkt nach unten überwunden, schwenkt das Federelement 32 den Niederhalter 26 nach unten in die Haltestellung. Das Federelement 32 bildet somit im Zusammenwirken mit der Schwenklagerung der Niederhalter 26 eine Totpunktfedermechanik.

Von jedem Niederhalter 26 steht ein hakenförmiges Antriebs- und Sperrelement 36 nach unten ab, das einstückig mit dem Niederhalter 26 ist. In der in Figuren 1 und 2 dargestellten Entnahmestellung untergreift das hakenförmige Antriebs- und Sperrelement 36 das Bodenelement 12, in der in Figuren 3 und 4 dargestellten Haltestellung befindet sich das Antriebs- und Sperrelement 36 seitlich außerhalb des Bodenelements 12 und auch seitlich außerhalb einer rahmenfesten Sperre 38. Wird das Bodenelement 12 nach unten gedrückt, drückt es das hakenförmige Antriebs- und Sperrelement 36 nach unten und außen und verschwenkt dadurch die Niederhalter 26 aus der Entnahmestellung in die Haltestellung. Wird ein Niederhalter 26 in der abgesenkten Haltestellung des Bodenelements 12 nach oben geschwenkt, stößt das Antriebs- und Sperrelement 36 gegen die rahmenfeste Sperre 38, die den Niederhalter 26 gegen ein Verschwenken in die Entnahmestellung sperrt. Ein Verschwenken der Niederhalter 26 aus der Haltestellung in die Entnahmestellung ist nur möglich, wenn die Niederhalter 26 zusammen mit dem Bodenelement 12 soweit angehoben werden, dass die Antriebs- und Sperrelemente 36 sich oberhalb der Sperren 38 befinden und über die Sperren 38 hinweg nach innen schwenken können.

Die Funktion des erfindungsgemäßen Sektglashalters 12 ist wie folgt: zum Halten eines nicht dargestellten Sektglases, das einen kreisrunden, plattenförmigen Fuß aufweist, wird der Fuß des Sektglases auf dem in der Entnahmestellung befindliche Bodenelement 12 aufgesetzt und mit dem Bodenelement 12 nach unten gedrückt. Nach Überwinden des Totpunkts des am Boden befestigten Federelements 18 schnappt das Federelement 18 mit dem Bodenelement 12 nach unten. Das Bodenelement 12 greift an den Antriebs- und Sperrelementen 36 der Niederhalter 26 an und schwenkt in oben beschriebener Weise die Niederhalter 26 in die in Figuren 3 und 4 dargestellte Haltestellung nach unten. Die Niederhalter 26 übergreifen den Fuß des Sektglases und halten dadurch das Sektglas auf dem Bodenelement 12.

Wird bspw. durch Beschleunigen, Bremsen oder Kurvenfahrt eines nicht dargestellten Fahrzeugs, in welches der Sektglashalter 10 eingebaut ist, das Sektglas mit einer horizontal wirkenden Kraft in beliebiger Richtung beaufschlagt, die man sich als an einem Schwerpunkt des Sektglases ggf. mit Inhalt angreifend vorstellen kann. Diese Kraft bewirkt ein Moment auf einen Stiel und den Fuß des Sektglases, das den Fuß des Sektglases an einer Stelle seines Umfangs nach unten drückt und an einer gegenüberliegenden Stelle nach oben hebt. Durch das Drücken des Fußes des Sektglases an einer Umfangsstelle nach unten wird das Bodenelement 12 des Sektglashalters unten in der Haltestellung gehalten. Dadurch werden alle Niederhalter 26 gegen ein Schwenken nach oben in die Entnahmestellung gesperrt, da die Antriebsund Sperrelemente 36 bei in der unteren Haltestellung befindlichem Bodenelement 12 soweit abgesenkt sind, dass die Antriebs- und Sperrelemente 36 beim Versuch, die Niederhalter 26 nach oben zu schwenken, gegen die Sperren 38 stoßen. Dadurch halten die Niederhalter 26 den Fuß des Sektglases auch an der Umfangsstelle unten auf dem Bodenelement 12, an der die auf das Sektglas ausgeübte Kraft in horizontaler oder seitlicher Richtung den Fuß des Sektglases anzuheben versucht. Das Sektglas ist dadurch kippsicher auf dem Sektglashalter 10 gehalten.

Die einzige Möglichkeit, das Sektglas zu entnehmen, ist ein Anheben des Sektglases nach oben. Der von den in der Haltestellung befindlichen Niederhaltern 26 übergriffene Fuß des Sektglases hebt das Bodenelement 12 an allen Niederhaltern 26 gleichmäßig nach oben an, bis die Antriebs- und Sperrelemente 36 sich oberhalb der Sperren 38 befinden und nach innen schwenken können. Beim weiteren Anheben des Sektglases schwenkt dessen Fuß die Niederhalter 26 über deren Totpunkt hinweg nach oben, so dass das Federelement 32 die Niederhalter 26 in die Entnahmestellung verschwenkt. Der Fuß des Sektglases kommt dadurch frei und das Sektglas kann abgehoben werden. Beim Anheben des Bodenelements 12 mit dem Sektglas schnappt das Federelement 18 des Bodenelements 12 das Bodenelement 12 nach oben in die Entnahmestellung.

Anstelle der mit dem Federelement 18 gebildeten Totpunktfedermechanik kann das Bodenelement 12 auch mit einer in der Zeichnung nicht dargestellten, an sich bekannten Push-Push-Verriegelungsmechanik in der unteren Haltestellung gehalten werden. Eine solche Push-Push-Verriegelungsmechanik verriegelt das Bodenelement 12 in der Haltestellung und wird durch einen kurzen Druck nach unten entriegelt, so dass das Bodenelement 12 zum Entnehmen des Sektglases angehoben werden kann.

## Patentansprüche

1. Sektglashalter, mit einem vertikal beweglichen Bodenelement (12), auf das ein Fuß eines Sektglases stellbar ist, mit mindestens zwei beweglichen Niederhaltern (26), die mit Abstand voneinander angeordnet sind, und die in einer Haltestellung den Fuß eines auf dem Bodenelement (12) stehenden Sektglases übergreifen und in einer Entnahmestellung nach außen bewegt sind, und mit einer Sperrmechanik (36, 38), die bei nach unten bewegtem Bodenelement (12) die Niederhalter (26) gegen eine Bewegung aus der Haltestellung in die Entnahmestellung sperrt.

2. Sektglashalter nach Anspruch 1, **dadurch gekennzeichnet, dass** die Niederhalter (26) eine Schwenklagerung (28, 30) aufweisen und aus der Haltestellung nach oben/außen in die Entnahmenstellung schwenkbar sind.

3. Sektglashalter nach Anspruch 1, **dadurch gekennzeichnet, dass** die Niederhalter (26) ein Antriebselement (36) aufweisen, an dem der Fuß des Sektglases beim Stellen des Sektglases auf das Bodenelement (12) unmittelbar oder mittelbar angreift und die Niederhalter (26) aus der Entnahmestellung in die Haltestellung bewegt.

4. Sektglashalter nach Anspruch 1, **dadurch gekennzeichnet, dass** der Sektglashalter (10) eine Totpunktfedermechanik aufweist, die die Niederhalter (26) nach Überwinden eines Totpunkts in einer Richtung in die Entnahmestellung bewegt und dort hält und die die Niederhalter (26) nach Überwinden des Totpunkts in einer anderen Richtung in die Haltestellung bewegt und dort hält.

5. Sektglashalter nach Anspruch 1, **dadurch gekennzeichnet, dass** der Sektglashalter (10) eine Push-Push-Verriegelungsmechanik aufweist, die die Niederhalter (26) in der Haltestellung hält.
